# EUROPEAN PATENT APPLICATION

(11) **EP 1 104 895 A2**
(43) Date of publication of application: **06.06.2001**
(21) Application number: 00309448.9
(22) Date of filing: 26.10.2000
(51) Int. Cl.: G05B 19/4062, B60N 2/02

(54) **Commutation pulse detector in a bi-directional motor**

(30) Priority: 15.11.1999 US 439739
(71) Applicant: THE CHERRY CORPORATION, Waukegan Illinois 60087 (US)
(72) Inventor: Veloo, Balagru K., Gurnee, Illinois 60031 (US)
(74) Representative: Cross, Rupert Edward Blount

(57) **Abstract**

Commutation pulses of a d.c. motor (1) are accurately counted to determine the position of an associated power accessory (11) by using high speed switches in a bridge circuit (S₁-S₄). When power is disconnected from the motor, the switches recirculate a reverse current resulting from coasting of the motor. Recirculation of this current provides dynamic braking of the motor and also allows commutation pulses to be sensed so that the relatively small coasting movement of the motor and its associated accessory can be precisely determined.

## Description

### BACKGROUND OF THE INVENTION

### 1. Technical Field of the Invention

The invention relates to a detector that counts commutation pulses in order to determine the position of a motor-operated device, for example, the seat of an automobile.

### 2. Description of the Related Art

It is known in the automobile industry that d,c. motors can control the movement of vehicle accessories. For example, it has long been known that bi-directional d.c. motors can control the movement of power seats, sunroofs, mirrors and windows.

In operation, each motor has a shaft that rotates clockwise or counterclockwise to move a vehicle accessory in corresponding different lateral directions. It is known that the degree of lateral movement of the accessory can be determined by counting commutation pulses that are derived from a circuit that powers the d.c. motor. If it is assumed that the motor has a predetermined number of magnetic poles and that each revolution of the shaft of the motor causes the accessory to move a known distance, the position of the accessory is then determined by the number of commutation pulses that are generated to cause the motor to move the accessory. The use of commutation pulses in a system of this type is disclosed in the Berland et al. U.S. Patent No. 5,497,326 which issued on March 5, 1996 and is owned by a common assignee.

The Berland et al. '326 patent discloses a system that counts commutation pulses of a motor in order to determine the position of an associated accessory such as a seat. The patent also discloses apparatus and methods of operation that ensure a relatively accurate count of the commutation pulses.

While the disclosed system of the patent constitutes a significant advance over associated prior art, it is desirable to provide additional improvements in commutation pulse detecting circuitry in order to determine the position of an associated accessory with greater accuracy, particularly when power is initially applied to the motor. It is also necessary to address a problem in commutation pulse counting that occurs when the control motor is turned off.

It has been found that, when power is disconnected from the motor, the shaft of the motor continues to spin due to its inertia and the associated accessory coasts a corresponding distance that has heretofore not been accurately detected. It would be desirable to provide a method for braking the motor to reduce the coasting movement of the accessory and to count accurately commutation pulses during this coasting movement so that the position of the accessory can be determined with great precision.

### SUMMARY OF THE INVENTION

The apparatus and method of the invention provides a means whereby commutation pulses can be counted with greater accuracy when the motor is first started to initiate movement of an associated accessory. The spike of voltage and inrushing current when the motor is started can reduce the accuracy of detection of commutation pulses, particularly when current switching is handled by relays with bouncing contacts that also generate noise. It has been found that rapid and smooth current switching can be achieved by using high speed switching devices such as Metal Oxide Semiconductor Field Effect Transistors (MOSFETs). Commutation pulses can be accurately detected when the motor is started and when the motor is operating by sensing signals on the low voltage side of the motor and using hardware and software filters to differentiate the pulses.

A dynamic braking function is achieved when the motor stops, by using field effect transistors in a bridge circuit that controls the flow of current to the motor. The transistors are turned on and off in a predetermined sequence in order to initially recirculate a surge of inductive current that momentarily occurs when power is disconnected from the motor. The operation of the transistors is changed again in order to recirculate current that is generated by the coasting motor. The recirculation of this current results in dynamic braking of the motor and therefore substantially reduces the time that the motor coasts. The commutation pulses generated during this reduced coasting interval are accurately detected so that the position of an associated accessory can be determined with great precision.

The apparatus and method of the invention therefore allow accurate counting of commutation pulses when the motor is started and when it is stopped. The system also provides dynamic braking of the motor in order to reduce movement of the motor and its accessory when motor power is switched off. These benefits and features of the invention will become apparent from a consideration of the following detailed description and accompanying drawings of presently preferred embodiments.

### BRIEF DESCRIPTION OF THE DRAWINGS

FIG. 1 is a diagram of a current supply bridge circuit that controls the movement of a d.c. motor and counts associated commutation pulses.

FIG. 2 is a table that shows the states of field effect transistor switches and diodes in operating modes for the circuit of FIG. 1.

### DETAILED DESCRIPTION OF THE INVENTION

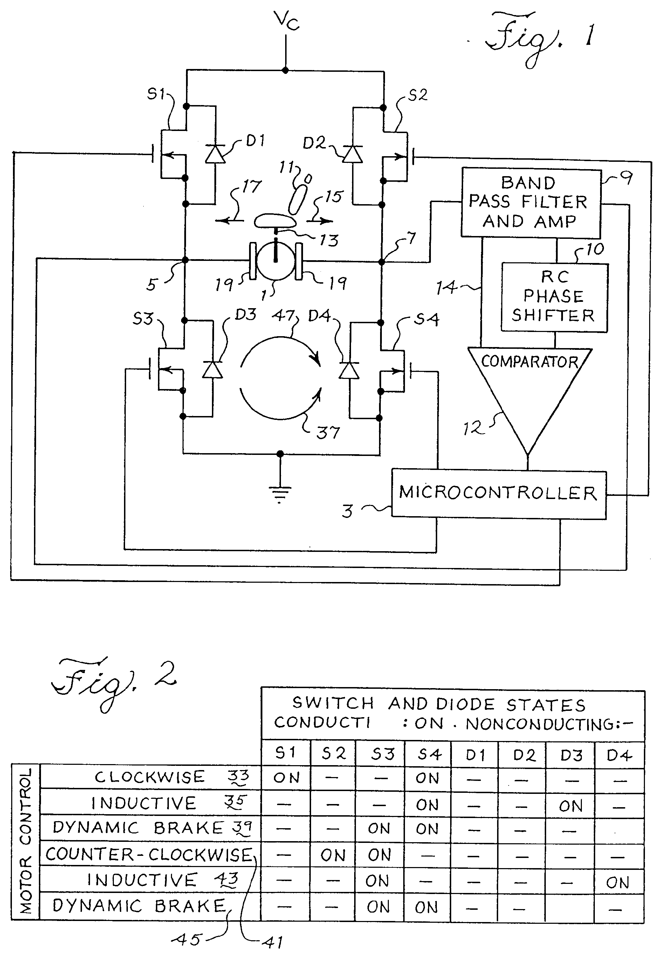

In the drawings, illustrated elements are not necessarily drawn to scale, and the same reference numbers designate like elements in several views. FIG. 1 shows a diagram of a circuit that controls the movement of a bi-directional d.c. motor 1. The circuit includes MOSFETs S1, S2, S3 and S4 that act as switches arranged in a bridge circuit to supply power to the motor 1. The MOSFET transistors have associated diodes D1, D2, D3 and D4. The switches S1, S2 and their associated diodes D1, D2 are connected to an input voltage Vc and are therefore connected on the "high side" of the circuit of FIG. 1. The MOSFETs S3, S4 and their associated diodes D3, D4 are connected as shown to ground on the "low side" of the circuit.

A microcontroller 3 controls the open or closed operation of the associated MOSFETs S1, S2, S3 and S4 in a manner that is known in the art. Thus, the microcontroller 3 can be programmed in a conventional manner to turn on or off the MOSFET transistors S1, S2, S3 and S4 in any desired operational pattern.

As shown in FIG. 1, circuit nodes 5 and 7 at opposite sides of the motor 1 connect through a band pass filter and voltage amplifier 9, an Rc phase shifter 10 and a comparator 12 to an input of the microcontroller 3. The band pass filter and amplifier 9 filters high frequency components from commutation signals detected at the nodes 5 and 7, amplifies the voltage of these signals and applies a relatively smooth filtered sinusoidal waveform to the Rc phase shifter 10 and comparator 12 which convert this waveform to a square wave pulse train. In operation, the output of the amplifier filter 9 is applied to the Rc phase shifter 10 and one input 14 of the comparator 12. The phase shifter 10 delays its associated signal and the comparator 12 therefore generates a square wave pulse having a width defined by the phase shift delay. The microcontroller 3 receives signals from the comparator 12 and uses a pattern recognition algorithm to detect square pulses having the expected pulse width and an expected frequency depending on the operational state of the motor 1. The software filters out and ignores both high and low frequency noise and counts only recognized commutation pulses with a leading and trailing edge. These commutation pulses are counted by the microcontroller to determine the degree of movement of an accessory, for example an automobile seat 11 that is controlled by the motor 1 in a conventional manner.

As shown in FIG. 1, if a rotor shaft 13 of the motor 1 moves in a clockwise direction, the seat 11 will move in the direction of an arrow 15. If the shaft 13 turns in a counterclockwise direction, the seat 11 is moved in the direction of an arrow 17.

It should be understood that a vehicle seat is described herein as an example of an accessory that may be controlled by the bi-directional motor 1. It should be appreciated that other accessories could also be controlled in a similar fashion. For example, the motor 1 could control the movement of power mirrors, a sunroof, or a vehicle window. Power accessories are also not limited to use in an automobile or other vehicle. The bi-directional motor of FIG. 1 could be used to move any known powered accessory in the manner described herein.

With reference to the motor 1 of FIG. 1, elements 19 are shown on opposite sides of the motor to indicate multiple magnetic poles that operate in a known manner, for example with commutators, to rotate the shaft 13 in a desired direction.

In the circuit of FIG. 1, when the microcontroller 3 closes the transistor switches S1 and S4, a current will flow from the voltage Vc at the high side and through the switch S1, motor 1, and switch S4 to the low side or ground of the circuit. The microcontroller 3 will maintain the switches S2 and S3 open so that current flows through the motor 1 in a direction that establishes, for example, a clockwise rotation of the shaft 13. The current waveform on the low side of the circuit at the node 7 is sensed as previously described to detect commutation pulses. The low side node 7 is used because it has a relatively low current that is limited by the resistance of the motor 1 and a low voltage resulting from the substantial voltage drop across the motor. This low amplitude signal will not saturate the comparator 12, even when the motor is initially turned on and relatively large voltage and current spikes are generated at the node 5. The microcontroller 3 therefore counts pulses received from node 7 and across the resistance of the motor and MOSFET S1 to detect the movement of the shaft 13 and the corresponding movement of the seat 11. This operation is facilitated by the relatively fast switching of the MOSFETs which allows the microcontroller 3 to count all of the commutation pulses associated with movement of the shaft of the motor 1. The high speed and smooth bounceless switching of the MOSFETs avoids undesirable interference that occurs with some relays that have bouncing switch contacts.

Likewise, when the switches S2 and S3 are closed and the switches S1 and S4 are opened, current flows to the motor 1 in the opposite direction, the shaft 13 rotates in a counterclockwise direction and the seat is moved in the direction of the arrow 17. In this case the microcontroller 3 counts square wave commutation pulses from the low side node 5 across the resistance of the motor and the MOSFET S2 in the previously discussed manner.

The circuit of FIG. 1 operates in a manner that enables dynamic braking of the motor and allows an accurate count of commutation pulses when power is disconnected. FIG. 2 illustrates a table that shows the operational condition of the switches and diodes of the circuit of FIG. 1 in association with motor control events. As shown in FIG. 2, clockwise rotation of the motor 1 at line 33 results from turning on the MOSFET switches S1 and S4. When it is desired to stop the motor and the corresponding movement of the seat 11, the microcontroller 3 opens the switch S1 and therefore disconnects the motor 1 from the voltage Vc. This condition is illustrated at line 35 of the table of FIG. 2. As shown by the entries for this line, the switches S1, S2 and S3 are turned off and the switch S4 remains on. The diode D3 associated with the switch S3 is also biased to a conducting "on" state. This operational state of the switches and diodes is maintained for the relatively short time that it takes for reverse current associated with the collapsing magnetic field of the motor 1 to provide an inductive current surge in the direction indicated by an arrow 47 of FIG. 1. The conducting operation of the switch S4 and diode D3 recirculates and drains this inductive surge of reverse current over a time period of, for example 500 microseconds to about 1 millisecond.

When the inductive surge is over, the microcontroller 3 turns on the switch S3 with the switch S4 as shown at line 39 of FIG. 2. The switches S3 and S4 are turned on in order to recirculate and drain a reverse current that is generated in the direction of the arrow 37 of FIG. 1 when the shaft 13 of the motor 1 continues to rotate in a clockwise direction due to inertia after power is turned off by opening the switch S1. The relatively rapid draining of this recirculated current dynamically brakes the coasting motor 1. During this relatively brief period of recirculating current, commutation pulses are detected at the node 7. The microcontroller 3 of FIG. 1 is able to count these pulses and therefore determine the amount of coasting movement of the seat 11. The microcontroller 3 can therefore very precisely determine the position of the seat 11.

The diodes D1, D2, D3 and D4 of FIG. 1 can be provided as separate components in order to ensure that they have sufficient current carrying capacity to operate in the described manner. Alternatively, it is possible that separate diodes may not be required if the intrinsic diode associated with each MOSFET switch can conduct the currents that flow in the circuit. Intrinsic diodes or separate diode components may therefore be used without departing from the invention.

It should be understood that, in operation of the circuit of FIG. 1, commutation pulses are detected at the node 7 across the resistance of the MOSFET switch S4 when current recirculates during the dynamic braking described with respect to the operational mode illustrated at line 39 of FIG. 2. The relatively small current and voltage applied through this resistance to the comparator 10 does not saturate the comparator and therefore ensures accurate detection of commutation pulses.

With reference to FIGS. 1 and 2, the motor 1 rotates in a counterclockwise direction in a switching mode illustrated at line 41 of FIG. 2. In this mode, the MOSFET switches S2 and S3 are closed, the switches S1 and S4 are open and the diodes do not conduct. Current is therefore conducted through the motor 1 in a direction that causes the shaft 13 of the motor to rotate in a counterclockwise direction. When power to the motor is initially turned off by opening the switch S2, as shown at line 43 of FIG. 2, the switch S3 conducts and the diode D4 is biased to recirculate the inductance current resulting from the collapse of the magnetic field of the motor 1. After the previously described relatively brief interval, the dynamic braking mode as shown at line 45 of FIG. 2 operates with closed MOSFET switches S3 and S4. These conducting switches enable generated motor current to recirculate in the direction shown by an arrow 47 of FIG. 1. As previously described, this recirculating current provides dynamic braking of the motor in the counterclockwise direction and commutation pulses are detected at node 5 of the circuit in order to determine the relatively small amount of coasting movement of the motor 1 and its associated seat 11.

It should be understood that the circuit of FIG. 1 may be employed with any number of uni-directional or bi-directional motors and associated bridge circuits to accurately measure the movement of any associated power accessory. For example, additional bi-directional motors and associated bridge circuits could be used to move the seat 11 in different directions, such as up or down or to change the angle of the back of the seat. The bridge circuits for the motors would control forward and reverse movement as previously described. Also, although MOSFETs are presently preferred as switches in the bridge circuits, other devices having comparable relatively fast and smooth switching operations could be employed without departing from the invention. For example, high speed, bounceless relays could be used.

Variations and modifications of the embodiments disclosed herein may therefore be made without departing from the scope of the invention. The aforementioned description is intended to be illustrative rather than limiting and it should be understood that the following claims and their equivalents set forth the scope of the invention.

## Claims

1. A method for accurately determining the rotational movement of a bi-directional motor, comprising the steps of:
recirculating inductive and generated current of the motor when power is disconnected from the motor; and
detecting and counting commutation pulses from the waveform of the current supplied to the motor.

2. The method of claim 1, further comprising the steps of connecting an accessory to the motor for movement with the motor and accurately determining the amount of movement of the accessory by counting said commutation pulses.

3. The method of claim 2, further including the step of providing a vehicle seat as the accessory.

4. The method of claim 2, further including the step of providing a vehicle mirror as the accessory.

5. The method of claim 2, further including the step of providing a vehicle sunroof as the accessory.

6. The method of claim 2, further including the step of providing a vehicle window as the accessory.

7. The method of any preceding claim, further including the step of providing switches in a bridge circuit to apply current to the motor in desired directions and to recirculate current when power is disconnected.

8. The method of any of claims 1 to 6, further including the step of providing MOSFET devices in a bridge circuit to apply current to the motor in desired directions and to recirculate current when power is disconnected.

9. A method for dynamically braking the rotational movement of the shaft of a motor when power to the motor is disconnected, comprising the steps of:
applying operational current to the motor;
rotating the shaft of the motor in response to the operational current; and
recirculating inductive and generated current of the motor when power is disconnected from the motor.

10. A method for accurately determining the rotational movement of a motor when power is disconnected from the motor, comprising the steps of:
applying operational current to the motor;
rotating the shaft of the motor in response to the operational current;
recirculating inductive and generated current of the motor when power is disconnected from the motor; and
detecting and counting commutation pulses from the waveform of the current supplied to the motor.

11. A bridge circuit for controlling the rotation of a rotor shaft of a bi-directional motor, comprising:
a first pair of MOSFETs for conducting current through the motor in one direction, one of said MOSFETs on the high side of the circuit and the other of said MOSFETs on the low side;
a second pair of MOSFETs for conducting current through the motor in an opposite direction, one of said MOSFETs on the high side of the circuit and the other of said MOSFETs on the low side; and
microcontroller means for turning off the high side MOSFET of a conducting MOSFET pair to disconnect power from the motor and recirculate current induced by the collapsing magnetic field of the motor;
said microcontroller means including means for turning on the low side MOSFETs to recirculate current generated by the coasting motor and dynamically brake the motor.

12. The bridge circuit of claim 11, wherein said microcontroller means includes means for sensing the waveform of the current driving the motor and detecting and counting commutation pulses of the motor to accurately determine the amount of movement of the shaft.

13. The bridge circuit of claim 12, further including an accessory coupled to said shaft for moving with the rotation of the shaft so that the detected commutation pulses accurately determine the amount of movement of the accessory.

14. The bridge circuit of any of claims 11 to 13, further including means for sensing electrical pulse signals at the low side of the motor, filtering noise from said signals and counting only recognized commutation pulses.

15. A bridge circuit for controlling the rotation of a rotor shaft of a bi-directional motor, comprising:
a first pair of switches for conducting current through the motor in one direction, one of said switches on the high side of the circuit and the other of said switches on the low side;
a second pair of switches for conducting current through the motor in an opposite direction, one of said switches on the high side of the circuit and the other of said switches on the low side; and
microcontroller means for turning off the high side switch of a conducting switch pair to disconnect power from the motor and recirculate current induced by the collapsing magnetic field of the motor;
said microcontroller means including means for turning on the low side switches to recirculate current generated by the coasting motor and dynamically brake the motor.

16. The bridge circuit of claim 15, wherein said microcontroller means includes means for sensing the waveform of the current driving the motor and detecting and counting commutation pulses of the motor to accurately determine the amount of movement of the shaft.

17. The bridge circuit of claim 16, further including an accessory coupled to said shaft for moving with the rotation of the shaft so that the detected commutation pulses accurately determine the amount of movement of the accessory.

18. The bridge circuit of any of claims 15 to 17, further including means for sensing electrical pulse signals at the low side of the motor, filtering noise from said signals and counting only recognized commutation pulses.
